# EUROPEAN PATENT SPECIFICATION

(11) **EP 2 224 266 B1**
(45) Date of publication and mention of the grant of the patent: **18.03.2015**
(21) Application number: 10001266.5
(22) Date of filing: 08.02.2010
(51) Int. Cl.: G01V 1/16

(54) **Light-detecting safety barrier**
Lichterkennungssicherheitsschranke
Barrière de sécurité de détection de lumière

(30) Priority: 27.02.2009 IT TO20090147
(43) Date of publication of application: 01.09.2010
(73) Proprietor: REER S.p.A., 10153 Torino (IT)
(72) Inventor: Mirandola, Francesco, I-10097 Collegno (TO) (IT); Scaravelli, Simone, 10097 Collegno (TO) (IT)
(74) Representative: Spandonari, Carlo

(56) References cited:
- DE-A1- 10 033 608
- DE-A1- 10 327 388
- DE-A1-102005 005 906
- DE-U1- 20 005 283
- DE-U1-202007 000 840
- DE-U1-202007 002 078
- US-A1- 2003 118 237

## Description

The present invention relates to a light-detecting safety barrier.

As known, safety barriers using light as intrusion-detecting means can be installed in those factories where machines operate which are potentially dangerous for the users, in order to control the gate leading to the dangerous area.

To this purpose, photo-electric barriers are known which comprise an emitting column, which is arranged on one side of the gate leading to the dangerous area and bears a plurality of equally-spaced, light-emitting diodes (LED) generating light beams which are detected by respective photo-diodes borne by a receiving column, which is arranged on the opposite side of the gate. The output signals from the photo-diodes are processed by magnitude and/or duration, in order to determine if any interruption of the signal, i.e., violation, has occurred. An opaque body is detected when one or more beams are interrupted. Therefore, the resolution of the barrier is defined by the distance between the light beams, and the minimum diameter of a detectable body is equal to the sum of the size of a light beam and the distance between the axes of two consecutive beams.

The document DE 20 2007 000 840, for example discloses such a barrier. Furthermore, an actual image of a camera is compared instant by instant with a reference image.

A drawback of the above-mentioned photo-electric barriers derives from the fact that the light beams generated by the LEDs are not exactly tubular but slightly divergent. This circumstance allows the barrier to continue to work even in case of small misalignments between the two columns and, consequently, to be vulnerable with respect to any attempts of tampering. For instance, a user unwarily wishing to insert a finger or a hand through the gate while the machine is in operation, e.g. in order to hold a workpiece, can easily tamper with the barrier by unloosing the screws by which one of the two columns is attached, and then by displacing the column upwards or downwards in order to open an unprotected passage without the system being able to perceive the tampering.

Another drawback of photo-electric barriers is that the bulk of the two columns arranged within the gate considerably narrows down the available transit area.

Therefore, it is a main object of the present invention to provide a safety barrier which is less exposed to both accidental displacements and displacements deriving from any attempts of tampering, and whose overall size within the gate is smaller than the conventional photo-electric barriers.

These problems are solved by the invention according to claim 1.

The invention will be now described in more detail with reference to a few preferred, non-exclusive embodiments shown by way of non-limiting examples in the attached drawings, wherein:
Fig. 1 diagrammatically shows a safety barrier according to the invention, which is installed within a gate to be controlled;
Fig. 2 is a diagram showing the light emitted by the barrier of Fig. 1 over time;
Fig. 3 diagrammatically shows the safety barrier in a second embodiment of the invention;
Fig. 4 is a diagram showing the light emitted by the barrier over time according to a third embodiment of the invention.

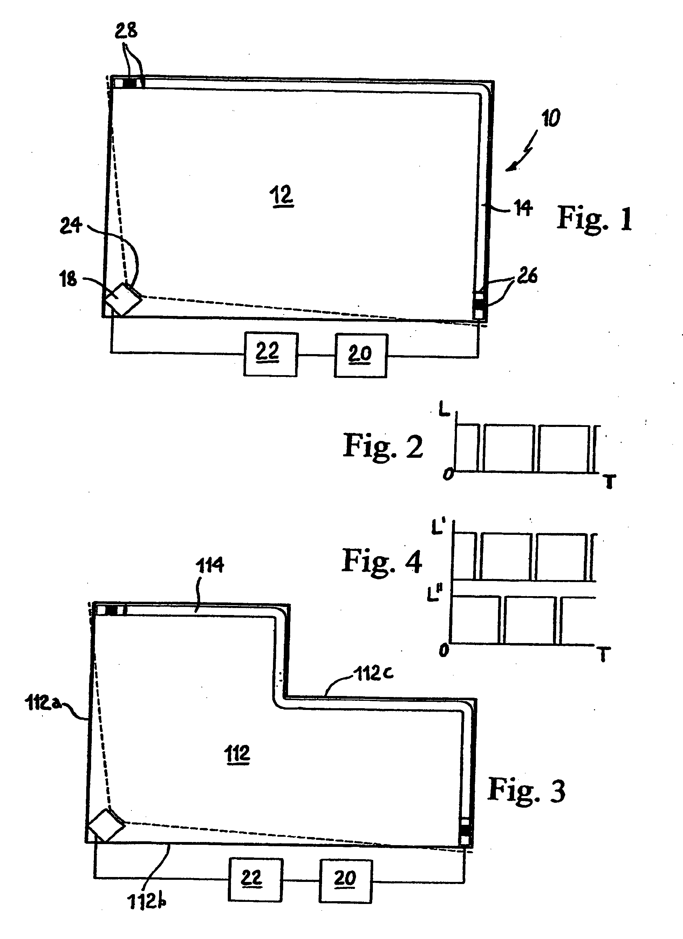

With initial reference to Figs. 1 and 2, a safety barrier 10 according to the invention is installable in a general gate 12 (which in the example of Fig. 1 has a rectangular profile) leading to a potentially dangerous area. Barrier 10 comprises a flexible, light-emitting tube 14 arranged along two adjacent sides of the periphery of the gate 12, and a camera 18, which is arranged on the periphery of the gate at the opposite corner with respect to the light-emitting tube, and is conventionally equipped with an optical system (not shown) which provides the camera with a field of view covering the entire length of light-emitting tube 14, as diagrammatically shown in broken lines in Fig. 1.

Preferably, light-emitting tube 14 consists of a lateral dispersion light pipe (fibre optics) driven at one of its ends by a solid state light source (not shown).

Light-emitting tube 14 is operatively connected to an electronic circuit 20 which pilots it by a controlled signal variable over time, whereby the light emitted from the tube is also variable over time. Preferably, the light-emitting tube 14 is piloted by a pulse signal so that it emits a flickering light L, as shown in Fig. 2 where the axis of abscissas represents the time T and the axis of ordinates represents the light emission L of tube 14. A control unit 22 is programmed to compare, instant by instant, the signal received by camera 18 with the signal generated by electronic circuit 20, as well as with a reference image corresponding to the controlled area, i.e., the image of the light-emitting tube in a clear condition, and to generate violation/failure signals in predetermined cases of non-correspondence, as will be described in more detail below.

Camera 18 is provided with a band-pass light filter 24 which is compatible with the radiation emitted by the light-emitting tube and is adapted to limit the susceptibility of the camera to external light interferences.

As shown in Fig. 1, the light-emitting tube bears positioning markers such as 26, 28 defining a pattern which will be memorized together with the reference image during the configuration of the system. Preferably, the markers consist of thin opaque lines obscuring the light emitted from the light-emitting tube.

During the installation and configuration of the system, the reference image of light-emitting tube 14 in a clear condition is memorized in control unit 22. At the start and in operation, control unit 22 compares, instant by instant, the reference image with the current image and generates an alarm signal each time the reference image differs from the current image by a predetermined, minimum number of pixels which defines the resolution of the system. This minimum number of pixels can be set at will, depending on the specific application, and corresponds to the minimum portion of light-emitting tube which, when obscured, should be interpreted as violation. As the person skilled in the art will immediately understand, the most critical condition, i.e., when the smallest portion of the light-emitting tube is obscured, occurs when the intrusive body is in contact with the light-emitting tube along the optical axis of the camera. Therefore, the resolution of the system should be set under such conditions.

On the basis of the same principles as described above, the system also controls that the positioning markers are always at the same position, in order to detect any misalignments between the camera and the light-emitting tube, due to vibrations or tampering.

Using a controlled, variable signal for piloting light-emitting tube 14 allows any system failures to be checked. In fact, as control unit 22, instant by instant, compares the signal emitted by electronic circuit 20 with the signal received by camera 18, reductions of brightness of all the pixels are expected in synchronism with the dark intervals of the light-emitting tube, only for a short time intervals. Accordingly, if a failure freezes the current image on the clear condition, control unit 22 preceives it and is programmed to generate a failure signal.

Moreover, using a controlled, variable signal makes the system failproof even if a body having the same color of the light-emitting tube passes through the gate.

According to a second embodiment of the invention shown in Fig. 3, the profile of gate 112, rather than rectangular, is "stepped" on one side, but the flexible light-emitting tube 114 allows the system to be easily adapted to this configuration, as well as to other similar configurations.

According to a third embodiment of the invention, two light-emitting tubes are used, which are arranged side-by-side along the gate-entering/exiting path and are spaced enough from each other to be distinctly perceived by the camera, with a dark area having a predetermined size between the tubes. Each tube is piloted in such a way as to emit a flickering light, as in the embodiment of Fig. 1, but the light emissions L' and L" of the two tubes are out-of-phase, as shown in Fig. 4.

With this embodiment, the control unit is programmed to regard an event as intrusion only when two portions having the same length of the two light-emitting tubes are interrupted almost simultaneously, whereby the system is more protected in case of light interferences or tampering. Moreover, as the person skilled in the art will immediately understand, with two light-emitting tubes the control unit can be easily programmed to distinguish the direction of the intrusion.

The programming of the control unit which controls the barrier falls within the normal knowledge of the person skilled in the art and therefore will not be described in detail.

A few prefered embodiments of the invention have been described herein, but of course many changes may be made by a person skilled in the art within the scope of the claims. In particular, although electronic circuit 20, control unit 22 and camera 18 are shown in the Figures as separate elements, of course all these elements could be incorporated in camera 18, or the camera could only incorporate a vision sensor and a lens, while the electronic circuit and the control unit could be placed in a different housing. Moreover, the fiber optic tube could be driven at both its ends, instead of only at one end as shown in the Figures. Furthermore, instead of using the fiber optic technology, the light-emitting tube could be formed in a different way, e.g., it could consist of a row of aligned LEDs mounted at short distance from each other on a flexible support and covered with a diffuser material which uniformy blends the emitted light along the whole length of the tube. In this case, the positioning markers could consist of one or more LEDs of a different color. Moreover, the light-emitting tube could have different profiles in section, e.g., circular, rectangular or trapezoidal profiles, or could by formed as a bundle of multiple fiber optics arranged side-by-side. Nevertheless, the light-emitting tube could be mounted to the sides of the gate in a way different from what described, e.g., it could be fixed to a self-adhesive, flexible support. Moreover, as the person skilled in the art will immediately understand, the light emitted from the light-emitting tube should not be understood as limited to the visible range, since any electromagnetic radiation having a wavelength in the range 400nm to 1500nm can be used. It is also evident that the camera can be either a black-and-white or a color camera, depending on the electromagnetic radiation generated by the light-emitting tube and on the violation-detecting algorithm which is used.

## Claims

1. Safety barrier installable in a gate (12) leading to a potentially dangerous area, **characterized in that** it comprises:
- at least one laterally-radiating, light-emitting tube (14), arranged along a portion of the periphery of the gate (12),
- an electronic circuit (20) connected to drive said light-emitting tube (14) with a controlled signal variable over time, whereby the light emitted from said tube is also variable over time,
- a camera (18) substantially arranged on the periphery of the gate (12) in front of the light-emitting tube (14) for detecting the image of the light-emitting tube,
- a control unit (22) programmed for comparing, instant by instant, the current image detected by the camera (18) with a reference image representing the light-emitting tube in a clear condition, and also comparing, instant by instant, said current image with said controlled signal, and for generating an alarm signal whenever the current image differs from the reference image and from said controlled signal by a predetermined, minimum number of pixels.

2. The safety barrier of claim 1 **characterized in that** said controlled signal is a pulse signal piloting said light-emitting tube (14) to emit a flickering light (L).

3. The safety barrier of any of claims 1 or 2, **characterized in that** said light-emitting tube has positioning markers (26, 28) detectable by the camera (18) and memorized in said reference image.

4. The safety barrier of claim 3, **characterized in that** said positioning markers consist of opaque lines (26, 28).

5. The safety barrier of any of claims 1 to 4, **characterized in that** said light-emitting tube (14) consists of a lateral dispersion light pipe (fibre optics) driven at at least one of its ends by a solid state light source.

6. The safety barrier of any of claims 1 to 5, **characterized in that** said camera (18) is provided with a band-pass light filter (24) which is compatible with the radiation emitted by the light-emitting tube and is adapted to limit the susceptibility of the camera to external light interferences.

7. The safety barrier of any of claims 1 to 6, in which said gate (12) has a rectangular profile, **characterized in that** said light-emitting tube (14) is arranged along two adjacent sides of the gate (12) and said camera (18) is arranged at the corner opposite to the light-emitting tube.

8. The safety barrier of any of claims 1 to 6, in which said gate (112) has two perpendicular sides (112a, 112b) connected by a stepped portion (112c), **characterized in that** said light-emitting tube (114) is arranged along said stepped portion (114c) and said camera is arranged at the opposite corner defined by said two perpendicular sides.

9. The safety barrier of any of claims 1 to 8, **characterized in that** said light-emitting tube (14) is made of a flexible material.

10. The safety barrier of any of claims 1 to 9, **characterized in that** it comprises two of said light-emitting tubes arranged side-by-side along a direction at right angles to the gate and spaced from each other in such a way as to be distinguishable by said camera, each of said tubes being piloted by respective out-of-phase variable signals (L', L"), and **in that** said control unit is programmed to generate an alarm signal in case of substantially simultaneous violation of both said light-emitting tubes.

## Patentansprüche

1. Sicherheitsschranke, die in einem Zugang (12) anbringbar ist, der zu einem potentiell gefährlichen Bereich führt, **dadurch gekennzeichnet, dass** diese umfasst:
- wenigstens eine seitlich ausstrahlende, lichtemittierende Röhre (14), die entlang eines Abschnitts des Umfangs des Zugangs (12) angeordnet ist,
- eine elektronische Schaltung (20), die angebunden ist, um die lichtemittierende Röhre (14) mit einem gesteuerten, zeitlich veränderlichen Signal anzusteuern, wodurch das von der Röhre emittierte Licht ebenfalls zeitlich veränderlich ist,
- eine Kamera (18), die im Wesentlichen an dem Umfang des Zugangs (12) vor der lichtemittierenden Röhre (14) angeordnet ist, um das Bild der lichtemittierenden Röhre zu erfassen,
- eine Steuerungseinheit (22), die dazu programmiert ist, das von der Kamera (18) aktuell erfasste Bild, Zeitpunkt für Zeitpunkt, mit einem Referenzbild zu vergleichen, das die lichtemittierende Röhre in einem unverdeckten Zustand darstellt, und ferner, Zeitpunkt für Zeitpunkt, das aktuelle Bild mit dem gesteuerten Signal zu vergleichen, und ein Warnsignal zu erzeugen, wenn sich das aktuelle Bild von dem Referenzbild und von dem gesteuerten Signal um eine vorbestimmte, minimale Anzahl von Pixeln unterscheidet.

2. Sicherheitsschranke nach Anspruch 1, **dadurch gekennzeichnet, dass** das gesteuerte Signal ein Impulssignal ist, das die lichtemittierende Röhre (14) dazu führt, ein flackerndes Licht (L) zu emittieren.

3. Sicherheitsschranke nach einem der Ansprüche 1 oder 2, **dadurch gekennzeichnet, dass** die lichtemittierende Röhre Positionsmarkierungen (26, 28) aufweist, die von der Kamera (18) erfassbar sind und in dem Referenzbild gespeichert sind.

4. Sicherheitsschranke nach Anspruch 3, **dadurch gekennzeichnet, dass** die Positionsmarkierungen aus opaken Linien (26, 28) bestehen.

5. Sicherheitsschranke nach einem der Ansprüche 1 bis 4, **dadurch gekennzeichnet, dass** die lichtemittierende Röhre (14) aus einer seitlich streuenden Lichtröhre (Faseroptik) besteht, die an wenigstens einem ihrer Enden von einer Festkörperlichtquelle angesteuert wird.

6. Sicherheitsschranke nach einem der Ansprüche 1 bis 5, **dadurch gekennzeichnet, dass** die Kamera (18) einen Bandpasslichtfilter (24) aufweist, der zu der von der lichtemittierenden Röhre emittierten Strahlung kompatibel ist und dazu eingerichtet ist, die Empfindlichkeit der Kamera auf externe Lichtinterferenzen zu beschränken.

7. Sicherheitsschranke nach einem der Ansprüche 1 bis 6, bei der der Zugang (12) ein rechteckiges Profil aufweist, **dadurch gekennzeichnet, dass** die lichtemittierende Röhre (14) entlang zweier angrenzender Seiten des Zugangs (12) angeordnet ist und die Kamera (18) an der der lichtemittierenden Röhre gegenüberliegenden Ecke angeordnet ist.

8. Sicherheitsschranke nach einem der Ansprüche 1 bis 6, bei der der Zugang (112) zwei rechtwinklige Seiten (112a, 112b) aufweist, die über einen gestuften Abschnitt (112c) verbunden sind, **dadurch gekennzeichnet, dass** die lichtemittierende Röhre (114) entlang des gestuften Abschnitts (114c) angeordnet ist und die Kamera an der gegenüberliegenden Ecke angeordnet ist, die durch die zwei rechtwinklingen Seiten ausgebildet ist.

9. Sicherheitsschranke nach einem der Ansprüche 1 bis 8, **dadurch gekennzeichnet, dass** die lichtemittierende Röhre (14) aus einem flexiblen Material ausgebildet ist.

10. Sicherheitsschranke nach einem der Ansprüche 1 bis 9, **dadurch gekennzeichnet, dass** diese zwei der lichtemittierenden Röhren umfasst, die nebeneinander entlang einer Richtung im rechten Winkel zu dem Zugang angeordnet sind und derart voneinander beabstandet sind, dass sie von der Kamera unterscheidbar sind, wobei jede der Röhren von entsprechenden phasenverschobenen variablen Signalen (L', L") gesteuert wird, und dadurch, dass die Steuereinheit dazu programmiert ist, ein Warnsignal zu erzeugen, für den Fall einer im Wesentlichen gleichzeitigen Übertretung von den beiden lichtemittierenden Röhren.

## Revendications

1. Barrière de sécurité pouvant être installée dans une porte (12) menant à une zone potentiellement dangereuse, **caractérisée en ce qu'**elle comprend :
- au moins un tube émetteur de lumière rayonnant latéralement (14), disposé le long d'une partie de la périphérie de la porte (12),
- un circuit électronique (20) connecté de façon à actionner ledit tube émetteur de lumière (14) avec un signal commandé variable au cours du temps, grâce à quoi la lumière émise à partir dudit tube est également variable au cours du temps,
- une caméra (18) sensiblement disposée sur la périphérie de la porte (12) à l'avant du tube émetteur de lumière (14) de façon à détecter l'image du tube émetteur de lumière,
- une unité de commande (22) programmée de façon à comparer, instant par instant, l'image actuelle détectée par la caméra (18) à une image de référence représentant le tube émetteur de lumière dans une condition claire, et à comparer également, instant par instant, ladite image actuelle audit signal commandé, et à générer un signal d'alarme à chaque fois que l'image actuelle diffère de l'image de référence et dudit signal commandé d'un nombre minimal prédéterminé de pixels.

2. Barrière de sécurité selon la revendication 1, **caractérisée en ce que** ledit signal commandé est un signal pulsé pilotant ledit tube émetteur de lumière (14) de façon à ce qu'il émette une lumière papillonnante (L).

3. Barrière de sécurité selon l'une quelconque des revendications 1 ou 2, **caractérisée en ce que** ledit tube émetteur de lumière comporte des marqueurs de positionnement (26, 28) pouvant être détectés par la caméra (18) et mémorisés dans ladite image de référence.

4. Barrière de sécurité selon la revendication 3, **caractérisée en ce que** lesdits marqueurs de positionnement sont constitués par des lignes opaques (26, 28).

5. Barrière de sécurité selon l'une quelconques des revendications 1 à 4, **caractérisée en ce que** ledit tube émetteur de lumière (14) est constitué par un tuyau de lumière à dispersion latérale (fibres optiques) actionné à au moins l'une de ses extrémités par une source de lumière à l'état solide.

6. Barrière de sécurité selon l'une quelconque des revendications 1 à 5, **caractérisée en ce que** ladite caméra (18) est munie d'un filtre de lumière passe-bande (24) qui est compatible avec le rayonnement émis par le tube émetteur de lumière, et qui est adapté de façon à limiter la susceptibilité de la caméra à des interférence de lumière extérieures.

7. Barrière de sécurité selon l'une quelconque des revendications 1 à 6, dans laquelle ladite porte (12) a un profil rectangulaire, **caractérisée en ce que** ledit tube émetteur de lumière (14) est disposé le long de deux côtés adjacents de la porte (12), et **en ce que** ladite caméra (18) est disposée au coin opposé au tube émetteur de lumière.

8. Barrière de sécurité selon l'une quelconque des revendications 1 à 6, dans laquelle ladite porte (112) comporte deux côtés perpendiculaires (112a, 112b) reliés par une partie étagée (112c), **caractérisée en ce que** ledit tube émetteur de lumière (114) est disposé le long de ladite partie étagée (114c), et **en ce que** ladite caméra est disposée au coin opposé défini par lesdits deux côtés perpendiculaires.

9. Barrière de sécurité selon l'une quelconque des revendications 1 à 8, **caractérisée en ce que** ledit tube émetteur de lumière (14) est réalisé en un matériau souple.

10. Barrière de sécurité selon l'une quelconque des revendications 1 à 9, **caractérisée en ce qu'**elle comprend deux desdits tubes émetteurs de lumière, disposés côte à côte le long d'une direction à angle droit avec la porte, et espacés l'un de l'autre de façon à pouvoir être distingués par ladite caméra, chacun desdits tubes étant piloté par des signaux variables déphasés respectifs (L', L"), et **en ce que** ladite unité de commande est programmée de façon à générer un signal d'alarme dans le cas d'une violation sensiblement simultanée desdits deux tubes émetteurs de lumière.
